(19)

**Europäisches Patentamt**
**European Patent Office**
**Office européen des brevets**

(11) **EP 4 656 289 A1**

(12) **EUROPEAN PATENT APPLICATION**

(43) Date of publication:
**03.12.2025 Bulletin 2025/49**

(21) Application number: **24178910.6**

(22) Date of filing: **29.05.2024**

(51) International Patent Classification (IPC):
*B01J 23/44* (2006.01)    *B01J 23/63* (2006.01)
*B01J 21/06* (2006.01)    *B01J 21/18* (2006.01)
*B01J 35/61* (2024.01)    *B01J 37/00* (2006.01)
*B01J 37/03* (2006.01)    *B01J 37/08* (2006.01)
*C01B 3/00* (2006.01)    *C07C 51/41* (2006.01)
*B01J 35/30* (2024.01)    *B01J 35/45* (2024.01)
*B01J 37/18* (2006.01)

(52) Cooperative Patent Classification (CPC):
**B01J 21/18; B01J 21/063; B01J 23/44;**
**B01J 23/63; B01J 35/37; B01J 35/393;**
**B01J 35/45; B01J 35/55; B01J 35/615;**
**B01J 37/0009; B01J 37/0236; B01J 37/035;**
**B01J 37/088; B01J 37/18;** B01J 2235/30;    (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **AKROS Energy GmbH**
**18299 Rostock-Laage (DE)**

(72) Inventors:
• **Massa, Jonas**
  **18299 Rostock-Laage (DE)**
• **Turan, Volkan**
  **18299 Rostock-Laage (DE)**
• **Sponholz, Peter**
  **18299 Rostock-Laage (DE)**
• **Abdel-Mageed, Ali M.**
  **18106 Rostock (DE)**
• **Al-Yusufi, Mohammed**
  **18059 Rostock (DE)**

• **Beller, Matthias**
  **18211 Nienhagen (DE)**
• **Eckelt, Reinhard**
  **18069 Rostock (DE)**
• **Jackstell, Ralf**
  **18106 Rostock (DE)**
• **Junge, Henrik**
  **18147 Rostock (DE)**
• **Mosrati, Jawaher**
  **70197 Stuttgart (DE)**
• **Sang, Rui**
  **252000 Shandong (CN)**
• **Schareina, Thomas**
  **18195 Cammin (DE)**
• **Stein, Carolin**
  **18057 Rostock (DE)**
• **Wohlrab, Sebastian**
  **18311 Ribnitz-Damgarten (DE)**

(74) Representative: **Hoffmann Eitle**
**Patent- und Rechtsanwälte PartmbB**
**Arabellastraße 30**
**81925 München (DE)**

(54) **PALLADIUM/TIO2-BASED CATALYST FOR REVERSIBLE HYDROGEN STORAGE SYSTEM**

(57)    The present invention relates to a $Pd/TiO_2$-based catalyst, obtainable by a deposition precipitation method, comprising the steps of providing a porous support material having a BET specific surface area of at least 150 $m^2$/g when measured with nitrogen at 77 K, wherein the porous support material is $TiO_2$-based support material; performing a deposition precipitation of Pd on the porous support material to obtain a $Pd/TiO_2$-based catalyst precursor; washing, drying, and activating the $Pd/TiO_2$-based catalyst precursor to obtain the $Pd/TiO_2$- based catalyst. The present invention also relates to a method of forming the said $Pd/TiO_2$-based catalyst, a use of the same in a reversible hydrogen storage-and-release system, a shaped body comprising the $Pd/TiO_2$- based catalyst, a method of forming a shaped body, and a use of the shaped body. A loading of 30 weight-% CeO2 improves the activity. A pellet-like shaped body of the catalyst with graphitic carbon as binder exhibits an increased resistance to deformation by compressive force when the BET surface is within the required higher range.

EP 4 656 289 A1

Figure 6

(a)

## TiO$_2$-P25-Graphite: 65 m$^2$g$^{-1}$

(b)

## TiO$_2$-M211-Graphite: 235 m$^2$g$^{-1}$

(52) Cooperative Patent Classification (CPC): (Cont.)
C01B 3/22; C01B 2203/0277; C01B 2203/1064;
C01B 2203/1082

**Description**

**Field of the invention**

The present invention relates to a Pd/TiO$_2$-based catalyst, a method of forming the same, a use of the same in a reversible hydrogen storage-and-release system, a shaped body comprising the Pd/TiO$_2$-based catalyst, a method of forming a shaped body comprising the Pd/TiO$_2$-based catalyst, and a use of the shaped body.

**Background art**

Anthropogenic CO$_2$ emissions are a leading contributor to global warming. One way to reduce the reliance on CO$_2$-emitting fossil fuels is to transition towards green renewables such as wind and solar energy sources. Unlike the chemical energy storage of fossil fuels, solar and wind can only intermittently provide energy. A chemical storage system which buffers excesses and deficiencies in energy generated from solar and wind sources is therefore highly desired.

One candidate for chemical energy storage is hydrogen. Hydrogen can be generated from electrolysis of water using surplus electricity provided by wind and solar sources during peak times. The gas can be stored and the energy can be released on demand, e.g. in a hydrogen fuel cell. However, gaseous hydrogen is unsuitable for storage since it has a very low volumetric energy density and thus relies on liquefaction or compression in a high-pressure cylinder for storage. Both processes are highly energy intensive and require extensive safety measures.

It is therefore desirable to contain hydrogen in a chemical storage system for reversible storage and release. One proposed solution is a bicarbonate/formate-based aqueous reaction system. This system relies on the reduction of bicarbonate to formate salts or formic acid in order to store hydrogen, and the oxidation of formate to bicarbonate to release hydrogen. The system can be described according to the following exemplary reaction formulae:

$$KHCO_3 + H_2 \rightarrow HCOOK + H_2O \qquad Eqn.\ 1$$

$$HCOOK + H_2O \rightarrow H_2 + KHCO_3 \qquad Eqn.\ 2$$

Both reactions typically take place in measurable rate in the presence of a catalyst. However, catalysts typically used in the art are not highly active, selective, and long-lived. Such typical Pd/TiO$_2$-based catalysts were reported for instance, by Mori et al (JACS, 2018, 140, 8902-8909, ACS publications), and Zhang et al (Journal of Catalysis, 405, 2022, 152-163, Elsevier). Moreover, catalyst beds used in such aqueous reaction systems are subjected to significant mechanical disturbances arising from pressure gradients, turbulent flow, etc. Over time, these disturbances lead to disintegration of the catalyst and to contamination of the reactive composition with the catalyst, making separation difficult.

The present invention has therefore been made with the goal of providing a mechanically robust catalyst which is highly active, selective, and long-lived.

**Brief discussion of the present invention**

According to a first aspect, the present invention relates to a Pd/TiO$_2$-based catalyst obtainable by a deposition precipitation method, comprising the steps of:

- providing a porous support material having a BET surface area of at least 150 m$^2$/g when measured with nitrogen at 77 K, wherein the porous support material is TiO$_2$-based support material;

- performing a deposition precipitation of Pd on the porous support material to obtain a Pd/TiO$_2$-based catalyst precursor;

- washing, drying, and activating the Pd/TiO$_2$-based catalyst precursor to obtain the Pd/TiO$_2$-based catalyst.

In a preferred embodiment, the Pd-loading in the Pd/TiO$_2$-based catalyst is 0.5-1.5 wt% based on the total mass of the Pd/TiO$_2$-based catalyst, preferably 0.8-1.2 wt%, wherein the Pd-loading is determined by inductively coupled plasma optical emission spectroscopy (ICP-OES).

In a preferred embodiment, the deposition precipitation is performed in an aqueous solution using at least one Pd-salt.

In a preferred embodiment, the at least one Pd-salt comprises Pd(NO$_3$)$_2$.2H$_2$O, Pd(CH$_3$COO)$_2$ or PdCl$_2$, preferably Pd(NO$_3$)$_2$.2H$_2$O.

In a preferred embodiment, the support material has a BET surface area of at least 200 $m^2/g$ when measured with nitrogen at 77 K, preferably at least 225 $m^2/g$.

In a preferred embodiment, the support material is a $CeO_2$-modified $TiO_2$-based support material.

In a preferred embodiment, the $CeO_2$-modified $TiO_2$-based support material comprises at least 25wt% $CeO_2$, and preferably at most 30 wt% $CeO_2$, wherein the wt% is the amount of Ce determined by inductively coupled plasma optical emission spectroscopy (ICP-OES) relative to the total amount of the $Pd/TiO_2$-based catalyst.

In a preferred embodiment, the $CeO_2$-modified $TiO_2$-based support material is prepared by a deposition precipitation of $CeO_2$ on porous $TiO_2$ having a BET surface area of at least 150 $m^2/g$ when measured with nitrogen at 77 K, followed by a calcination step.

In a second aspect, the present invention relates to a method of forming a $Pd/TiO_2$-based catalyst by a deposition precipitation method, comprising the steps of:

- providing a porous support material having a BET surface area of at least 150 $m^2/g$ when measured with nitrogen at 77 K, wherein the porous material is $TiO_2$-based support material;
- performing a deposition precipitation of Pd on the porous support material to obtain a $Pd/TiO_2$-based catalyst precursor;
- washing, drying, and activating the $Pd/TiO_2$-based catalyst precursor to obtain the $Pd/TiO_2$-based catalyst.

In a third aspect, the present invention relates to a use of the $Pd/TiO_2$-based catalyst of the first aspect in a reversible hydrogen storage-and-release system based on aqueous hydrogenation of bicarbonate and aqueous dehydrogenation of formate.

In fourth aspect, the present invention relates to a shaped body comprising the $Pd/TiO_2$-based catalyst according to the first aspect and graphitic carbon as a binder, wherein the shaped body is obtained by pressing with a pressure of at least 1 ton/$cm^2$.

In a fifth aspect, the present invention relates to a method of forming a shaped body comprising the $Pd/TiO_2$-based catalyst according to the first aspect and graphitic carbon as a binder, wherein the method comprises pressing with a pressure of at least 1 ton/$cm^2$.

In a sixth aspect, the present invention relates to a use of the shaped body according to the fourth aspect in a reversible hydrogen storage-and-release system based on aqueous hydrogenation of bicarbonate and aqueous dehydrogenation of formate.

## Brief discussion of the figures

Figure 1 shows (a) a high-resolution STEM micrograph of Preparative Example A.1, and (b) a corresponding EDS mapping of Pd and (c) Ti.

Figure 2 shows the Chi-function and the Fourier transform of the EXAFS data of EXAFS Example A.1.

Figure 3 shows (a) a high-resolution STEM micrograph of Preparative Example B.1, and (b) a corresponding EDS mapping of Pd, (c) Ce, and (d) Ti.

Figure 4 shows the Chi-function and the Fourier transform of the EXAFS data of EXAFS Example B.1.

Figure 5 shows the particle size distribution of the material of Preparative Example 1.

Figure 6 shows diagrams of compressive strength tests for (a) $TiO_2$-P25-Graphite, (b) $TiO_2$-M211-Graphite, and (c) $TiO_2$-M211.

## Detailed discussion of the present invention

Hereafter, the present invention will be discussed in detail.

## $Pd/TiO_2$-based catalyst

According to a first aspect, the present invention relates to a $Pd/TiO_2$-based catalyst obtainable by a deposition precipitation method, comprising the steps of:

- providing a porous support material having a BET surface area of at least 150 m$^2$/g when measured with nitrogen at 77 K, wherein the porous support material is TiO$_2$-based support material;
- performing a deposition precipitation of Pd on the porous TiO$_2$-based support material to obtain a Pd/TiO$_2$-based catalyst precursor;
- washing, drying, and activating the Pd/TiO$_2$-based catalyst precursor to obtain the Pd/TiO$_2$-based catalyst.

The term "Pd/TiO$_2$-based catalyst" describes a catalyst substantially comprising palladium on TiO$_2$. In one embodiment, the term describes a catalyst substantially consisting of Pd on TiO$_2$. The palladium is deposited on TiO$_2$ by means of a deposition precipitation method as further described below. The term "TiO$_2$" refers to a material that is substantially TiO$_2$ but may comprise oxygen defects and/or may be partially reduced as is common in the art. The material may therefore also be referred to as TiO$_x$ wherein $1.90 < X \leq 2$, preferably $X = 1.96$.

The Pd/TiO$_2$-based catalyst is obtainable by a deposition precipitation method comprising the steps listed above. The steps are discussed in more detail below.

The first step involves providing a porous support material having a BET surface area of at least 150 m$^2$/g when measured with nitrogen at 77 K. The support material (which may also be referred to as "the porous support material") is TiO$_2$-based support material. This step may be realised by direct synthesis of a porous support material which is based on TiO$_2$ or by obtaining a commercially available support material which is based on TiO$_2$. TiO$_2$-based support material substantially comprises TiO$_2$, within the common stoichiometric bounds discussed above. In one embodiment, TiO$_2$-based support material comprises at least 70 wt% TiO$_2$, wherein the remaining wt% make up modifications as discussed below and/or impurities. In other embodiments, TiO$_2$-based support material comprises at least 80 wt% TiO$_2$, at least 90 wt%, at least 95 wt%, or at least 99 wt%.

The second step involves performing a deposition precipitation of Pd on the porous support material to obtain a Pd/TiO$_2$-based catalyst precursor. The term "deposition precipitation" has its customary meaning as used in the art and refers to the precipitation of a metal precursor on a suspended support material. The term "Pd" in the specific context of "performing a deposition precipitation of Pd" is not particularly limited and does not only refer to elemental Pd. Rather, it refers to typical Pd-containing precursors such as Pd salts and/or colloidal Pd suspensions.

The third step involves washing, drying, and activating the Pd/TiO$_2$-based catalyst precursor to obtain the Pd/TiO$_2$-based catalyst. The washing method is not particularly limited and may include any washing methods typically used in the art. In one embodiment, washing comprises rinsing the precursor with deionised water to discharge impurities. The drying method is not particularly limited and may include any drying methods typically used in the art. These may include drying at room temperature and pressure or under reduced pressure and/or at elevated temperature. In all the aforementioned methods, a desiccant substance such as silica gel may be kept in close contact to the precursor. Activating the precursor to yield the catalyst refers to the reduction of adsorbed Pd-ions to elemental Pd and/or more generally, the conversion of oxidised Pd species in the catalyst precursor to elemental Pd. The activating method is not particularly limited and may include any activating method typically used in the art. Typically, such an activating method comprises reduction in the presence of hydrogen gas. In a preferred embodiment, activating is carried out at elevated temperatures under hydrogen flow and in the presence of an inert carrier gas, such as nitrogen, argon and/or helium. Exemplary embodiments of the activation method are disclosed in the examples.

Following the third step, the obtained Pd/TiO$_2$-based catalyst is typically hermetically sealed and stored under an inert atmosphere for storage. Nitrogen, argon and/or helium gas may be used for this purpose.

The present inventors have unexpectedly found that a Pd/TiO$_2$-based catalyst obtained by the above method comprises particularly small and highly dispersed Pd clusters. Such small clusters lead to a particularly high catalytic activity in the dehydrogenation of formate and/or hydrogenation of bicarbonate. It is believed that the small cluster size and high dispersion is related to the relatively high surface area of the provided porous support material. Notably, the specific surface areas of the support materials based on TiO$_2$ known in the art are lower with only ca. 100 m$^2$/g (cf Zhang et al and Mori et al cited above). The obtained Pd/TiO$_2$-based catalysts comprise Pd clusters of < 1 nm. Conversely, Pd/TiO$_2$-based catalysts prepared from TiO$_2$-based substrate materials with a lower surface area are larger and less dispersed, leading to a lower catalytic activity.

In a preferred embodiment, the Pd-loading in the Pd/TiO$_2$-based catalyst is 0.5-1.5 wt%, based on the total mass of the Pd/TiO$_2$-based catalyst, preferably 0.8-1.2 wt%, wherein the Pd-loading is determined by inductively coupled plasma optical emission spectroscopy (ICP-OES). The Pd-loading amount can be controlled by adjusting the concentration of the Pd precursor during the deposition precipitation. As is known in the art, the nominal Pd loading and the Pd loading determined by ICP-OES may differ slightly from one another.

In a preferred embodiment, the deposition precipitation is performed in an aqueous solution using at least one Pd-salt.

In one embodiment, this is carried out at room temperature, whereas in other embodiments this may be elevated temperatures, e.g. at at least 40°C, at least 50 °C, or at least 60°C. The Pd-salt may not be particularly limited. The deposition precipitation may be carried out for at least 1 hr, preferably at least 5 hrs, and even more preferably overnight.

Following the deposition precipitation, the water may be removed *in vacuo* and the composition may be dried in an oven, optionally at elevated temperature and reduced pressure. Alternatively, the catalyst precursors may be collected using a filter, such as a micron filter and/or a dialysis membrane.

In a preferred embodiment, the at least one Pd-salt comprises $Pd(NO_3)_2.2H_2O$, $Pd(CH_3COO)_2$ or $PdCl_2$. Preferably, the at least one Pd-salt comprises $Pd(NO_3)_2.2H_2O$. In a particularly preferred embodiment, at least one Pd-salt is $Pd(NO_3)_2.2H_2O$. It has been found that $Pd(NO_3)_2.2H_2O$ as a Pd-salt/metal precursor yields Pd/TiO$_2$-based catalysts according to the present invention with particularly high catalytic activity in the dehydrogenation of formate and/or hydrogenation of bicarbonate.

In a preferred embodiment, the TiO$_2$-based support material based on TiO$_2$ has a BET surface area of at least 200 m$^2$/g when measured with nitrogen at 77 K, preferably at least 225 m$^2$/g. It has been found that support materials based on TiO$_2$ with high BET surface areas yield particularly small and dispersed Pd-clusters and highly catalytically active Pd/TiO$_2$-based catalysts.

In a preferred embodiment, the Pd/TiO$_2$-based catalyst is particulate. Preferably, the particle size is at most 100 nm, preferably at most 80 nm, preferably at most 60 nm, preferably at most 40 nm, preferably at most 20 nm, preferably at most 15, and most preferably at most 10 nm. The particle sizes mentioned above are average particle sizes determined from TEM analysis. To add statistic weight to the analysis, at least 100 particles are measured.

In a preferred embodiment, the support material is a CeO$_2$-modified TiO$_2$-based support material. A "CeO$_2$-modified TiO$_2$-based support material" is a TiO$_2$-based support material comprising a CeO$_2$-modification. The method of CeO$_2$-modification is not particularly limited and any method practised in the art may be used. It has been found that Pd/TiO$_2$-based catalysts based on a CeO$_2$-modified TiO$_2$-based support material are particularly catalytically active. It is believed that CeO$_2$ is a more reducible support having a higher affinity for the formation of surface oxygen defects. This is believed to have a stabilising effect on the Pd metal clusters, a metal-oxide mediated charge transfer effect, and further adsorption sites.

In a preferred embodiment, the CeO$_2$-modified TiO$_2$-based support material comprises at least 25wt% CeO$_2$, and preferably at most 30 wt% CeO$_2$, wherein the wt% is the amount of Ce determined by ICP-OES relative to the total amount of the Pd/TiO$_2$-based catalyst. In a particularly preferred embodiment, the CeO$_2$-modified TiO$_2$-based support material comprises 30 wt% CeO$_2$. It is observed that at this wt%, the catalytic activity of the catalyst is optimised. The remaining wt% of all embodiments discussed in this paragraph are preferably TiO$_2$.

In a preferred embodiment, the CeO$_2$-modified TiO$_2$-based support material is prepared by a deposition precipitation of CeO$_2$ on porous TiO$_2$ having a BET surface area of at least 150 m$^2$/g when measured with nitrogen at 77 K, followed by calcination step. The deposition precipitation of CeO$_2$ on porous TiO$_2$ is not particularly limited and any method typically used in the art may be used. In one embodiment, a Ce-salt is dissolved in water and the porous TiO$_2$ is added. In one embodiment, this is carried out at room temperature, whereas in other embodiments this may be elevated temperatures, e.g. at at least 40 °C, at least 50 °C, or at least 60 °C. The Ce-salt is not particularly limited. In one embodiment, the Ce-salt is any of $CeCl_3$, $Ce_2(SO_4)_3$, $Ce(OH)_4$, $Ce_2(CO_3)_3$, and $Ce(NO_3)_3.6H_2O$. In a preferred embodiment, the Ce-salt is $Ce(NO_3)_3.6H_2O$. The deposition precipitation may be carried out for at least 1 hr, preferably at least 5 hrs, and even more preferably overnight, i.e. for 12 hrs. Following the deposition precipitation, the water may be removed *in vacuo* and the composition may be dried in an oven, optionally at elevated temperature and reduced pressure. The calcination step is not particularly limited and may include any method typically practised in the art. In one embodiment, calcination comprises heating the substrate in air. In one embodiment, calcination comprises heating the substrate in air to at least 200 °C, preferably at least 300°C and even more preferably at least 390 °C.

## Method of forming Pd/TiO$_2$-based catalyst

In a second aspect, the present invention relates to a method of forming a Pd/TiO$_2$-based catalyst by a deposition precipitation method, comprising the steps of:

- providing a porous support material having a BET surface area of at least 150 m$^2$/g when measured with nitrogen at 77 K, wherein a porous support material is TiO$_2$-based support material;
- performing a deposition precipitation of Pd on the porous support material to obtain a Pd/TiO$_2$-based catalyst precursor;

- washing, drying, and activating the Pd/TiO$_2$-based catalyst precursor to obtain the Pd/TiO$_2$-based catalyst.

Said method yields the Pd/TiO$_2$-based catalyst of the first aspect of the present invention. The method is further characterised as described in the first aspect. This includes all methods relating to the CeO$_2$-modification mentioned in the first aspect.

**Use of Pd/TiO$_2$-based catalyst**

In a third aspect, the present invention relates to a use of the Pd/TiO$_2$-based catalyst according to the first aspect in a reversible hydrogen storage-and-release system based on aqueous hydrogenation of bicarbonate and aqueous dehydrogenation of formate.

Said reversible hydrogen storage-and-release system based on aqueous hydrogenation of bicarbonate and aqueous dehydrogenation of formate may also be referred to as "the bicarbonate/formate-based aqueous reaction system" or "the reversible hydrogen storage-and-release system".

The term "use of the Pd/TiO$_2$-based catalyst according to the first aspect in a reversible hydrogen storage-and-release system based on aqueous hydrogenation of bicarbonate and aqueous dehydrogenation of formate" as used herein refers to a use for storing hydrogen to provide stored hydrogen and a use for releasing hydrogen to provide released hydrogen in the bicarbonate/formate-based aqueous reaction system discussed below. As is known in the art, the reactions occurring in the below described system are reversible so that the two processes cannot be strictly separated from one another. "Use of the Pd/TiO$_2$-based catalyst according to the first aspect in a reversible hydrogen storage-and-release system" involves customary and common steps. These are, *inter alia,* providing a reaction vessel, such as a reactor suitable to carry out the methods; providing the reagents of the reaction system discussed below, such as bicarbonate salts, formate salts and hydrogen; providing water as an aqueous medium; setting appropriate temperature, pressure and reaction run times; and separating the products. Although the reactions are reversible and therefore not strictly separable as discussed above, the position of the equilibrium may be influenced to favour the use of the Pd/TiO$_2$-based catalyst for storing hydrogen or use of the Pd/TiO$_2$-based catalyst for releasing hydrogen in the bicarbonate/-formate-based aqueous reaction system. This may be done in accordance with Le Chatelier's principle as is known and customary in the art. Through such an influence on the position of the equilibrium, the use for storing hydrogen and the use for releasing hydrogen separated from one another as far as possible. Thus, it is possible for one use to dominate over the other at one place and time. For instance, by pressurizing a reactor containing the aqueous reaction system with hydrogen in a first place and time, the use for hydrogen storage can be favoured in the first place and time over the use for releasing hydrogen. Likewise, by adjusting the composition of the reaction system to contain more hydrogen carrier (here, formate) than hydrogen carrier precursor (i.e. the non-hydrogenated version of the hydrogen carrier, here bicarbonate) and by not providing pressurized hydrogen, at a second place and time, both different from the first, the use for hydrogen release can be favoured.

The reversible hydrogen storage-and-release system (or bicarbonate/formate-based aqueous reaction system) is an aqueous reaction system comprising bicarbonate and formate salts. Typically, this is in the form of an aqueous solution comprising bicarbonate and formate salts. Unless otherwise specified, the simpler expression "the reaction system" may also refer to the bicarbonate/formate-based aqueous reaction system. Reactions occurring in the reaction system are a 'hydrogen-storage' hydrogenation reaction of bicarbonate and a 'hydrogen-release' dehydrogenation of formate reaction.

It has been found that the catalyst of the first aspect is highly suitable for both the hydrogenation reaction and the dehydrogenation reaction in said reaction system, exhibiting high activity, high selectivity and high turnover.

In a preferred embodiment, the use of the third aspect of the present invention further comprises providing a carbonate salt and adding said carbonate salt to the reaction system. The provided and added carbonate salt may be in a solid form, in a dissolved form or in a dispersion. Providing and adding the added salt to the reaction system may also comprise combining and mixing dry salts before dissolving them. Following the addition of the provided carbonate salt to the reaction system, the bicarbonate/formate-based aqueous reaction system comprises carbonate salts, bicarbonate salts and formate salts dissolved in water. Typically, the reaction system substantially consists of carbonate salts, bicarbonate salts and formate salts dissolved in water. The reaction system has thus the components formate salt (A$_1$HCOO), bicarbonate salt (A$_2$HCO$_3$) and optionally carbonate salt (A$_3$CO$_3$), wherein A$_1$, A$_2$ and A$_3$ are counterions, dissolved in water. Preferably, the reaction system comprises at least 75 wt% of the components A$_2$HCOO, A$_2$HCO$_3$, and optionally A$_3$CO$_3$, more preferably at least 80 wt%, more preferably at least 90 wt%, more preferably at least 95 wt%, more preferably at least 99 wt%, and even more preferably at least 99.9 wt%. The above mentioned wt% are relative to the total dry weight of the reaction system.

It has been unexpectedly found that by providing and adding a carbonate salt to the reaction system, the CO concentration in the hydrogen-based gas mixture released from the reaction system in a hydrogen-release reaction is very low. CO can be formed in unwanted side reactions, contaminate the released hydrogen and poison Pt electrodes in hydrogen fuel cells. The hydrogen released from such a reaction system is therefore highly pure, uncontaminated and ready for use in a hydrogen fuel cell. An energy and cost-intensive gas purification step is therefore not required.

In a preferred embodiment, the concentration of added carbonate in the reaction system is less than 1 M, preferably less than 0.5 M, even more preferably between 0.2 and 0.4 M, and yet more preferably between 0.28 M and 0.32 M. It has been found that the CO concentration is particularly low if the added carbonate concentration is within the above range. It is also believed that at this concentration, the efficiency of the hydrogen-release reaction is particularly high.

In an alternative preferred embodiment, the use of the third aspect of the present invention further comprises adjusting the carbonate concentration in the aqueous reaction system, so that the adjusted carbonate concentration is between 0.2 and 0.4 M, and preferably between 0.28 and 0.32 M.

In a preferred embodiment, the provided carbonate salt is $Li_2CO_3$, $Na_2CO_3$, $K_2CO_3$, $(NH_4)2CO_3$, $MgCO_3$ or $CaCO_3$. Consequently, the $A_3$ counterions are $Li^+$-ions, $Na^+$-ions, $K^+$-ions, $(NH_4)^+$-ions, $Mg^{2+}$-ions or $Ca^{2+}$-ions. Preferably, the provided carbonate salt is $K_2CO_3$ with $A_3$ counterions being $K^+$-ions.

In a preferred embodiment, the bicarbonate/formate-based aqueous reaction system and the optionally added/adjusted carbonate salt comprise the same counterions. Consequently, $A_1$, $A_2$ and optionally $A_3$ are all the same. Typically, no further counterions are present other than those associated with the conventional impurities of the salts. For instance, in one embodiment $A_1$, $A_2$ and (where added) $A_3$ being all the same, comprise at least 95 mol% of the counterions to the carbonate, bicarbonate and formate in the aqueous reaction system, preferably at least 97 mol%, and even more preferably at least 99 mol%. In a particularly preferred embodiment, the counterions are $K^+$-ions, meaning that $A_1$, $A_2$ and (where added) $A_3$ are all $K^+$. It is believed that when $A_1$, $A_2$ and (where added) $A_3$ are all $K^+$, the efficiency of hydrogen-release reaction is particularly high.

In a preferred embodiment, the sum of the concentrations of bicarbonate and formate is between 1 M and 15 M, preferably between 2 M and 10 M, and even more preferably between 4 M and 6 M.

In a preferred embodiment, the ratio of the concentration of carbonate to the sum of the concentrations of bicarbonate and formate in the aqueous reaction system is between 10:1 and 1:1000, preferably between 5:1 and 5:1000, more preferably between 1:1 and 1:100, and even more preferably between 2:100 and 10:100.

The use according to the third aspect of the present invention may take place in a batch process or in a continuous flow process.

In one embodiment, the hydrogenation of bicarbonate in the use according to the third aspect takes place at a temperature of 20-100 °C, preferably 30-90 °C, preferably 40-80°C, preferably 50-70 °C, and even more preferably 55-65 °C. In one embodiment, the hydrogenation of bicarbonate takes place at a hydrogen pressure of 5-55 bar, preferably 10-50 bar, preferably 15-45 bar, preferably 20-40 bar, and even more preferably 25-35 bar. In one embodiment, the hydrogenation of bicarbonate takes place at a temperature of 20-100 °C and at a hydrogen pressure of 5-55 bar, preferably 30-90 °C and 10-50 bar, preferably 40-80°C and 15-45 bar, preferably 50-70 °C and 20-40 bar, and even more preferably 55-65 °C and 25-35 bar. The above embodiments pertain to a use for storing hydrogen.

In one embodiment, the dehydrogenation of formate in the use of the third aspect is carried out by means of a hydrogen-release reaction in a batch process. Such a reaction may be carried out between 20-100 °C, preferably 30-90 °C, preferably 40-80°C, preferably 50-70 °C, and even more preferably 55-65 °C. The above embodiments are preferably carried out at atmospheric pressure. The above embodiments pertain to a use for releasing hydrogen.

In another embodiment, the dehydrogenation of formate is carried out by means of a hydrogen-release reaction in a flow process. Such a reaction may be carried out between 20-100 °C, preferably 30-90 °C, preferably 40-80°C, preferably 50-70 °C, and even more preferably 55-65 °C. In one embodiment, the flow process is configured through a flow reactor having a catalyst bed. In one embodiment, the catalyst bed is not particularly limited. In another embodiment, the catalyst bed is an immobile catalyst bed. The above embodiments pertain to a use for storing hydrogen.

In another embodiment, the dehydrogenation of formate is carried out by means of a hydrogen-release reaction in a flow process. Such a reaction may be carried out between 10 and 100 °C, preferably between 25 °C and 90 °C and even more preferably between 50 °C and 70 °C. In one embodiment, the flow process is configured through a flow reactor having a catalyst bed, said catalyst bed comprising the catalyst according to the first aspect. In one embodiment, the catalyst bed is not particularly limited. In another embodiment, the catalyst bed is an immobile catalyst bed.

### Shaped body comprising Pd/TiO$_2$-based catalyst

In a fourth aspect, the present invention relates to a shaped body comprising the Pd/TiO$_2$-based catalyst according to the first aspect and graphitic carbon as a binder, wherein the shaped body is obtained by pressing with a pressure of at least 1 ton/cm$^2$.

The shaped body thus obtained may have a mass of (around) 10 - 50 mg, for example 15 - 40 mg, or 18 - 32 mg, such as 20 mg or 30 mg, preferably 20 mg. It is preferable that, after pressing, the shaped body is a cylinder like pellet, preferably with dimensions of (around) 2 mm in height and (around) 2 mm in diameter. In other words, the shaped body in a preferred embodiment may be obtained by pressing a total amount of (around) 20 mg of a mixture of Pd/TiO$_2$-based catalyst and graphitic carbon as a binder with a pressure of at least 1 ton/cm$^2$ into a shape of a cylinder like pellet with dimensions of (around) 2 mm in height and (around) 2 mm in diameter. For example, 20 grams of the mixture of Pd/TiO2-based catalyst and graphitic carbon may be provided and a total of 1000 shaped bodies may be formed therefrom (either at the same time or subsequently) by pressing with a pressure of at least 1 ton/cm$^2$. However, the present disclosure is not limited to a mixture with a mass of 20 grams. It is also possible to provide, for example 100g or 1000g of the mixture for forming the shaped bodies therefrom (e.g., with the above-noted mass of 20 mg per shaped body).

The present inventors have found that a shaped body obtained by pressing with a pressure of at least 1 ton/cm$^2$ has an unexpectedly high mechanical stability. This is particularly suitable for a use in the reversible hydrogen-and-release system based on aqueous hydrogenation of bicarbonate and aqueous de-hydrogenation of formate discussed in more detail above. In such a system, the catalyst bed is typically subjected to significant mechanical disturbances leading to disintegration of the catalyst and/or contamination of the reactive composition with the catalyst. This problem is overcome by the provision of a mechanically stable and highly active catalyst. The fourth aspect of the present invention also relates to a shaped body as discussed above obtained by pressing with a pressure of at least 1 ton/cm$^2$ without any restrictions on the mass of sample.

In a preferred embodiment, the shaped body is obtained by pressing with a pressure of at least 1.5 ton/cm$^2$, preferably at least 2 ton/cm$^2$. In another preferred embodiment, pressure does not exceed 10 ton/cm$^2$, preferably it does not exceed 8 ton/cm$^2$, and even more preferably it does not exceed 5 ton/cm$^2$. In another preferred embodiment, the pressure is 1-10 ton/cm$^2$, preferably 1.5-8 ton/cm$^2$, and even more preferably 2-5 ton/cm$^2$. If the pressure exceeds the maximum loads disclosed above, a reduction in the BET surface area of the catalyst may be observed. The above limitations of the pressure are also disclosed without any restrictions on the mass of sample.

In a preferred embodiment, the content of the graphitic carbon in the shaped body is 2-30 wt%, preferably 5-15 wt%, and even more preferably 7.5-12.5 wt%. It has been observed that when the content of graphitic carbon in the shaped body is in the above-disclosed wt% ranges, the catalytic activity of the shaped body in the dehydrogenation of formate and/or hydrogenation of bicarbonate is particularly high.

In a preferred embodiment, the shaped body has a compressive strength of (at least) 45 N/mm$^2$, more preferably of (at least) 47 N/mm$^2$, or even more preferably of (at least) 49 N/mm$^2$ or (at least) 50 N/mm$^2$. In the present context, compressive strength is defined by the maximum stress that the test specimen can withstand during deformation and/or by the breaking stress at which the test specimen is substantially deformed, i.e., breaks or collapses. It may be determined in a compressive strength test in which a test specimen is placed in a test apparatus and a compressive force is applied to the test specimen by a piston, whereby the dimension of the piston is chosen such that it allows for a full contact of the corresponding surface area of the shaped body with the piston. The force (stress) applied to the test specimen is recorded together with a deformation of the test specimen (displacement of the piston). The maximum stress applied to the test specimen without it breaking and/or the stress right before the test specimen is substantially deformed corresponds to the compressive strength of the test specimen. It has surprisingly been found that shaped bodies comprising the Pd/TiO$_2$-based catalyst of the first aspect have a higher compressive strength than shaped bodies comprising catalysts based on TiO$_2$ having a lower BET area. For instance, in one embodiment, shaped bodies comprising a Pd/TiO$_2$-based catalyst prepared from a TiO$_2$-based support material having a BET surface area of at least 150 m$^2$/g have a higher compressive strength than Pd/TiO$_2$-based catalyst prepared from TiO$_2$-based support materials having a BET surface area of less than 150 m$^2$/g, e.g. 64 m$^2$/g.

**Method of forming shaped body**

In a fifth aspect, the present invention relates to a method of forming a shaped body comprising the Pd/TiO$_2$-based catalyst according to the first aspect and graphitic carbon as a binder, wherein the method comprises pressing with a pressure of at least 1 ton/cm$^2$. The method is further characterised as described in the fourth aspect. The method of the fifth aspect includes all methods relating to the preparation of the Pd/TiO$_2$-based catalyst of the first and second aspect as well as the CeO$_2$ modification mentioned in these aspects.

**Use of shaped body comprising Pd/TiO$_2$-based catalyst**

In a sixth aspect, the present invention relates to a use of the shaped body according to the fourth aspect in a reversible hydrogen-and-release system based on aqueous hydrogenation of bicarbonate and aqueous de-hydrogenation of formate.

The reversible hydrogen-and-release system is the same reversible hydrogen storage-and-release system as discussed in the third aspect of the present invention and it may be further characterized in the same way as discussed therein. The use according to the sixth aspect includes the step of further providing a carbonate salt and adding said carbonate salt to the reaction system. These embodiments, disclosed in detail in the fourth aspect, are all included in the sixth aspect.

Based on the foregoing discussion, the following examples and without wishing to be bound by theory, the problem has been solved to provide a catalyst having a high selectivity, activity and turnover for the reversible hydrogen storage-and-release system based on aqueous hydrogenation of bicarbonate and aqueous dehydrogenation of formate.

**Examples**

The present invention is exemplified by the following non-limiting embodiments.

The following experimental techniques were used throughout the examples.

BET surface areas/specific surface areas were determined by the BET method using a nitrogen adsorption isotherm obtained at 77 K.

Pd and $CeO_2$ loading were determined by inductively coupled plasma optical emission spectroscopy (ICP-OES).

Transmission electron micrographs (TEM) were obtained using a Cs-corrected FEI Titan using an acceleration voltage of 200 kV. Micrographs were obtained in scanning (STEM) mode using, where appropriate, a HAADF and an EDS detector. Micrographs were used to determine the size of $TiO_2$ particles and Pd cluster sizes. Over 250 $TiO_2$ particles were measured, and a particle size distribution was determined. The average value is reported.

X-ray absorption spectroscopy at the extended (EXAFS) Pd K-edge was also collected. EXAFS data were collected at SAMBA beamline at Soleil Synchrotron France. The analysis of EXAFS data and the fit by calibrated experimental references gives information into the Pd coordination environment which can be translated into geometric and chemical characteristics. For CN numbers in the range given the quality of the fit essentially did not change while outside it decreased measurably. K1, k2 and k3 weights of the EXAFS data fits show comparable values of coordination numbers. Chi function and a Fourier transform of the XANES/EXAFS data were also recorded. Fit parameters are discussed in the tables below. CN stands for coordination number; $s^2$ stands for sigma squared, the mean squared displacement included in the Debye-Waller-Factor $[\exp(-2\sigma^z k^z)]$; R is the bond distance of the backscattering atom from the main absorber (Pd absorber); and $E_0$ is the energy shift reference parameter. Where relevant, further aspects relating to the XAS data collection and processing is discussed in the description of the corresponding figures.

**Example A - Preparation of Pd/$TiO_2$-based catalyst**

Commercially available $TiO_2$-based support materials were obtained having the characteristics laid out in Table A below.

Catalysts were synthesized on an ca. 3 g batch scale. The selected $TiO_2$-based supports were loaded with around 1 wt % Pd using deposition precipitation. An appropriate amount of $Pd(NO_3)_2 \cdot 2H_2O$ was dissolved in 0.1 M NaOH under stirring at 70 °C for 30 mins. As an example 0.065 g of $Pd(NO_3)_2 \cdot 2H_2O$ may be used in 50 mL of NaOH (0.1 M). The selected supports were immersed into the solutions and stirred at the same temperature for a further 2 hrs. Afterwards, the precipitate Pd/$TiO_2$-based catalyst precursor was filtered, washed with deionized water and dried over night at room temperature.

The material was then activated by reduction as follows. First the material was introduced into a tube furnace and purged by a flow of inert gas (50 ml min$^{-1}$ of $N_2$ or Ar) in a tube furnace for 30 min. Next, the temperature of the tube furnace was step-wisely increased up to 200°C (10°C min$^{-1}$). The material was then exposed to a flow of 10% $H_2$/$N_2$ (50 ml min$^{-1}$) at 200°C for 2 hours. The hydrogen flow was then exchanged by inert gas once again and the material was left to cool down slowly. Obtained Pd/$TiO_2$-based catalyst samples were collected and sealed in glass tubes.

It has been found that $Pd(NO_3)_2 \cdot 2H_2O$ yields the most highly active catalysts (data not shown in the Example C). The catalysts can however be carried out using other Pd precursors, such as $PdCl_2$ or colloidal Pd.

**Table A (i)| Preparative examples and material study**

| | Preparative Example A.1 | Comparative Preparative Example A.2 |
|---|---|---|
| **$TiO_2$-based support materials** | $TiO_2$-M211 (Ventator GmbH, Duisburg, Germany) | P25 (Evonik) |
| **BET surface area/Specific** | 225-300 m$^2$/g | 64 m$^2$/g |
| **surface area** | | |
| **Pd loading** | 0.8 wt% | 0.8 wt% |
| **$TiO_2$ particle size** | 7 ± 2 nm | 20 ± 5 nm |

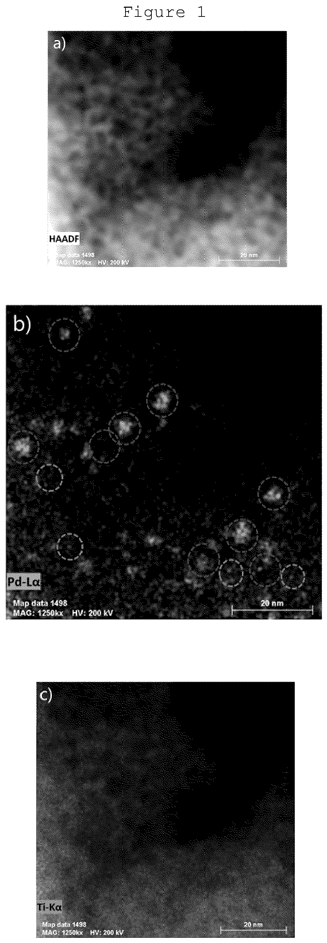

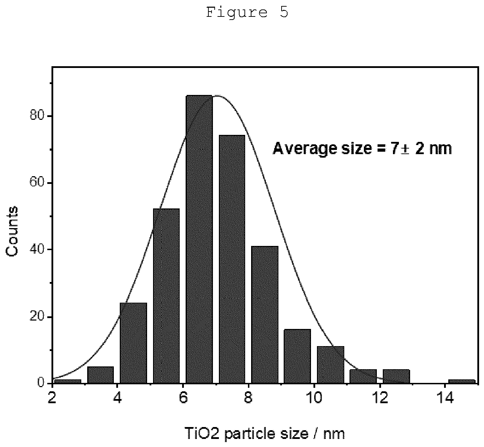

Figure 1 shows (a) a high-resolution STEM micrograph of Preparative Example A.1, and (b) a corresponding EDS mapping of Pd and (c) Ti. The comparison of the EDS maps with the STEM micrographs indicates the presence of Pd in a highly dispersed form and very small clusters. Aggregates of tiny nanoparticles (< nm) or subnanometer sized $Pd_x$ clusters can be observed (see Figure 1 b, red circles). Regions of non-aggregated $Pd_x$ clusters are shown by the blue circles. Figure 5 shows the particle size distribution of Preparative Example 1.

Next, the EXAFS data were recorded and analysed as described above. First the as-prepared fresh Preparative Example A.1 was measured at room temperature under a flow of helium. The last step of the sample preparation of these samples includes reduction in hydrogen at 200°C in 5% $H_2$/He. The sample was stored over 3 weeks in sealed vials. The table below shows the EXAFS for two samples of Preparative Example A.1. The first, titled EXAFS Example A.1 differs from the second sample EXAFS Example A.2, which has undergone a second $H_2$/He reduction step for 1 hour.

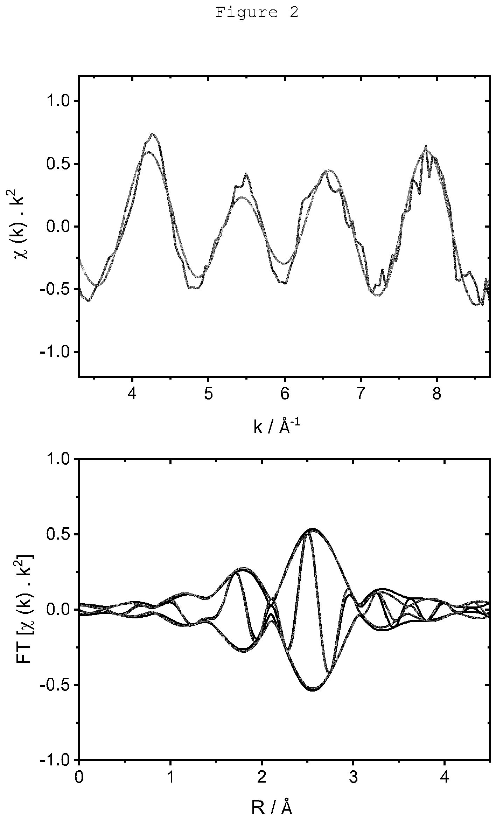

The Chi-function and the Fourier transform are shown in Figure 2. (Top) EXAFS data (Chi function: k-range: 2.8 9.2 Å$^{-1}$) for EXAFS Example A.1 measured under a flow of He at room temperature and ambient pressure at SAMBA beamline (Soleil Synchrotron France). (Bottom) Fourier transform of EXAFS data (R-space: 0-4.5). The data reduction and further processing of EXAFS data was done employing XDAP software suite, with a standard process described in detail elsewhere (D. Koningsberger, B. Mojet, G. Van Dorssen, D. Ramaker, XAFS spectroscopy; fundamental principles and data analysis. Topics in catalysis 10, 143-155 (2000)). Theoretical references were calculated by the FEFF 8.0 code and were calibrated with respect to experimental EXAFS data collected for Pd foil and PdO. (cf A. Ankudinov, J. Rehr, Theory of solid-state contributions to the X-ray elastic scattering amplitude. Physical Review B 62, 2437 (2000); and A. L. Ankudinov, B. Ravel, J. Rehr, S. Conradson, Real-space multiple-scattering calculation and interpretation of x-ray-absorption near-edge structure. Physical Review B 58, 7565 (1998).) EXAFS analysis was carried out in R-space using fixed k and R ranges (k: 2.8-9.0 Å-1, R: 0.0-5.0 Å). The data are fitted to the nearest backscattering distance (Pd-Pd, Pd-O shell).

**Table A (ii)| EXAFS data and fits**

| Sample | Scatter shell | CN | $s^2/Å^{-2}$ | R/Å | $E_0$ |
|---|---|---|---|---|---|
| **EXAFS Example A.1** | Pd-O<br>Pd-Pd | 0.861 0.6<br>4.31 0.5 | 0.021 0.0 05<br>0.006±0. 003 | 2.041 0.0 2<br>2.741 0.0 2 | -3.62 12<br>4.63 13.62 |
| **EXAFS Example A.2** | Pd-Pd | 4.31 0.5 | 0.007±0. 002 | 2.741 0.0 14 | 5.87 10.8 |

The Fourier transform of EXAFS data of EXAFS Example A.1 showed a backscattering from a distance of 2.74 $\pm$ 0.015 Å which is characteristic for Pd-Pd coordination shells with a coordination number of 4.3$\pm$ 0.6 (cf. A. Jentys, Estimation of mean size and shape of small metal particles by EXAFS. Physical Chemistry Chemical Physics 1, 4059-4063 (1999)). In addition, a back scattering from a distance of 2.04 $\pm$ 0.02 Å but with a very small coordination number equal to 0.86±0.6 can be determined for the Pd-O scatter shell. The present results are consistent with literature results for very small Pd particle sizes which are below 0.8 nm and which are slightly oxidized by a PdO$_x$ layer. The results of EXAFS Example A.2 are fully consistent with those of EXAFS Example A.2 except that they do not show the Pd-O scatter due to the second reduction. The results are also fully consistent with the STEM results of Figure 1.

## Example B - Preparation of Pd/TiO$_2$-based catalyst from a CeO$_2$-modified TiO$_2$-based support material

The preparation of Example A was modified as follows. Catalysts were prepared on a ca. 25 g scale. The high surface area TiO$_2$-based support was modified to include a CeO$_2$ layer. A CeO$_2$ layer was created on the TiO$_2$-based support using a deposition precipitation method. The procedure can be summarizing das follows: 37.2 g Ce(NO$_3$)$_3$.6H$_2$O were dissolved in 1000 ml deionized water. 28 g Hombikat (M211) were added to Ce solution at 60 °C overnight. Water was then removed by rotary evaporation at 60 °C with speed 70 until total solvent removal. The mixture was then drying over night at 80 °C in an oven. Finally, a calcination step in air at 200 °C for 4 hrs (rate of heating 3°C/min) was carried out to yield a CeO$_2$-modified TiO$_2$-based support material.

Subsequently, the CeO$_2$-modified TiO$_2$-based support material was loaded with 0.5 wt% Pd using a precipitation deposition method and washed, dried and activated as described above. The final material was obtained and designated as Preparative Example B.1.

**Table B (i)| Preparative examples and material study**

| | Preparative Example B.1 |
|---|---|
| **TiO$_2$-based support materials** | TiO$_2$-M211 (Ventator GmbH, Duisburg, Germany) |
| **BET surface area/Specific surface area** | 225-300 m$^2$/g |
| **Pd loading** | 0.5 wt% |
| **CeO$_2$ loading** | 30 wt% (ICP-OES = 27.6 wt%) |
| **TiO$_2$ particle size** | 7 $\pm$ 2 nm |

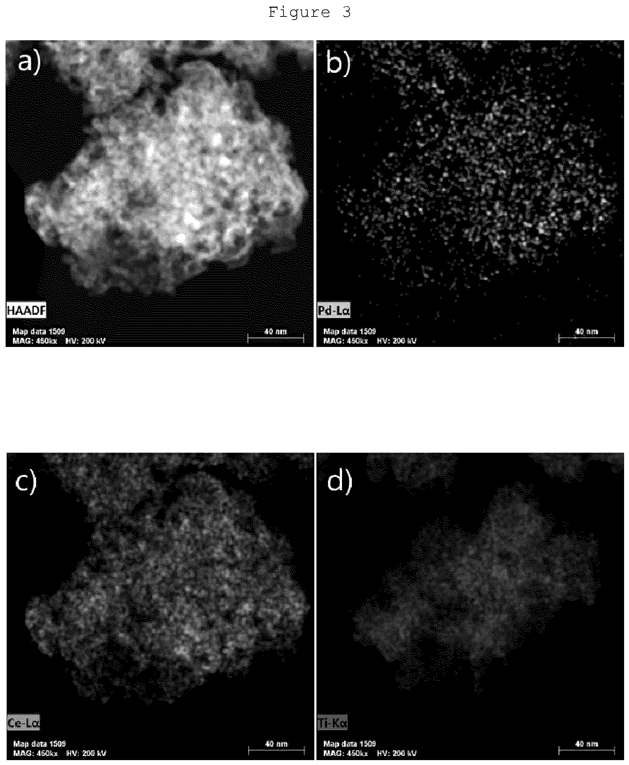

Figure 3 shows (a) a high-resolution STEM micrograph of Preparative Example B.1, and (b) a corresponding EDS mapping of Pd, (c) Ce, and (d) Ti. Similar to Figure 1, this shows highly dispersed Pd nanostructures (Pd single atoms, clusters and sub-2nm nanoparticles).

Corresponding EXAFS experiments to those of Example A were carried out giving fully consistent results suggesting a similarly small Pd cluster size. EXAFS Example B.1 corresponds to the singly-reduced Preparative Example B.1 and EXAFS Example B.2 is the double-reduced variant. The small coordination numbers and the suggested small atom clusters are fully consistent with the STEM results of Figure 3.

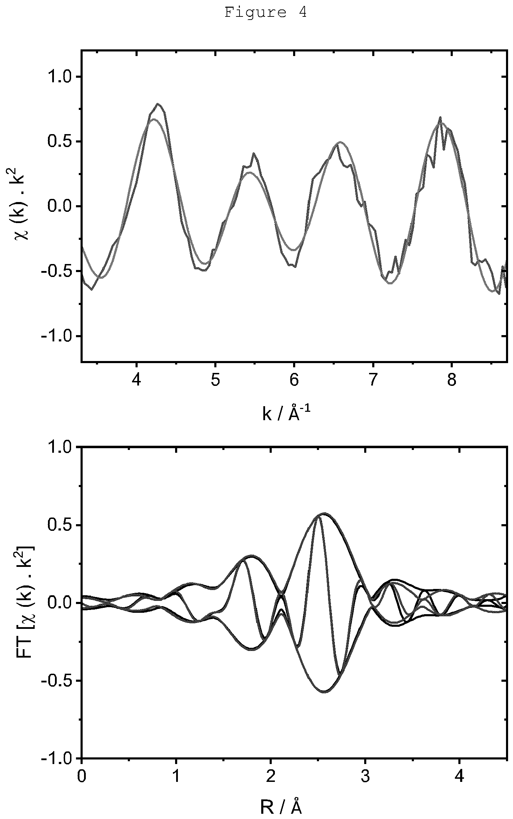

The EXAFS data are shown in Figure 4. Top: EXAFS data (Chi function: k-range: 2.8 9.2 Å-1) for Preparative Example B.1 measured under a flow of He at room temperature and ambient pressure at SAMBA beamline (Soleil Synchrotron France), and (b) Fourier transform of EXAFS data (R-space: 0-4.5).

**Table B (ii)| EXAFS data and fits**

| Sample | Scatter shell | CN | $s^2/Å^{-2}$ | R/Å | $E_0$ |
|---|---|---|---|---|---|
| **EXAFS Example B.1** | Pd-O<br>Pd-Pd | 0.9211.4<br>4.710.6 | 0.0210.0 037<br>0.007±0. 003 | 2.0310.0 16<br>2.7310.0 2 | -3.62114.35<br>4.5±1.29 |
| **EXAFS Example B.2** | Pd-Pd | 3.4±0.6 | 0.006±0. 002 | 2.74±0.0 15 | 7.7±0.92 |

## Example C | Use of Pd/TiO$_2$-based catalyst in reversible hydrogen storage-and-release system

Catalytic activity of the obtained Pd/TiO$_2$-based catalysts was investigated in a formate dehydrogenation reaction.

Catalysts obtained in Example A were introduced to a 250 mmol HCOOK solution in the presence of 1.8 M K$_2$CO$_3$. The solutions were stirred at 60 °C at ambient pressure for 3 hrs. The released hydrogen was captured using gas burette. The inventive catalyst according to Preparative Example A.1 showed a very high selectively for hydrogen (>99.999%) with no measurable CO formation. The inventive catalyst according to Preparative Example A.1 showed a significantly higher activity than the comparative catalyst according to Comparative Preparative Example A.2.

**Table C(i) | Catalyst activity in formate dehydrogenation reaction**

| | Example C.1 | Comparative Example C.2 |
|---|---|---|
| **Catalyst** | Preparative Example A.1 | Comparative Preparative Example A.2 |
| **Catalytic activity (released hydrogen volume, normalised to Pd content)** | 156 mL g$_{Pd}$ $^{-1}$ | 56 mL g$_{Pd}$ $^{-1}$ |

The same formate dehydrogenation experiments were performed using the catalysts obtained in Example B.

**Table C(ii) | Catalyst activity in formate dehydrogenation reaction**

| | Example C.3 | Example C.4 |
|---|---|---|
| **Catalyst** | Preparative Example B.1 | Preparative Example A.1 |
| **Catalytic activity (released hydrogen volume, normalised to Pd content)** | [125 mL g$_{Pd}$$^{-1}$] | [70 mL g$_{Pd}$$^{-1}$] |

The catalyst according to Preparative Example B.1 was found to have a very high long term stability in HCOOK dehydrogenation lasting over several days.

In a further experiment, the catalysts were used to hydrogenate bicarbonate.

5.4 mmol of KHCO$_3$ was dissolved in 1.5 mL of water and the catalysts listed below were added. The composition was contacted with hydrogen under at a pressure of 30 bar and at 60 °C for 18 hrs. A higher yield of HCOOK was recorded for the catalyst of Preparative Example B.1 than for that of Preparative Example A.1. The yield was determined by $^1$H-NMR in D$_2$O using 100 μl DMSO as an internal standard. The spectra were measured on Bruker AV-III 300 (300 MHz) or Bruker AV-III HD 400 (400 MHz) NMR spectrometers. Chemical shifts were reported in the d-scale using the remaining Protons of the deuterated solvent as an internal Standard. MestReNova (Version 14.0.1-23559) was used for processing and Integration of the NMR spectra.

**Table C(iii) | Catalytic activity in bicarbonate hydrogenation reaction**

|  | Example C.5 | Example C.6 |
|---|---|---|
| Catalyst | Preparative Example B.1 | Preparative Example A.1 |
| Yield of HCOOK | 41 % | 8 % |

**Example D - Preparation of shaped body comprising Pd/TiO$_2$-based catalyst**

Shaped bodies were formed of the catalysts of the present invention.

20 g of the powdered catalysts listed below were combined with an appropriate amount of graphitic carbon binder (X% as described in the table below). The total amount (Pd/TiO$_2$ catalyst + graphitic carbon) was then mixed using a mortar to reach a homogenous mixture. Afterwards, the mixture was pressed into a cylinder like pellet (2 mm height x 2 mm diameter) under a pressure of 3 ton/cm$^2$. The following shaped bodies were obtained.

|  | P. Example D.1 | P. Example D.2 | P. Example D.3 | P. Example D.4 | P. Example D.5 |
|---|---|---|---|---|---|
| Catalyst | P. Example A.1 | P. Example A.1 | P. Example A.1 | P. Example A.1 | P. Example A.1 |
| Amount C binder | 2.5 wt% | 5 wt% | 10 wt% | 15 wt% | 30 wt% |

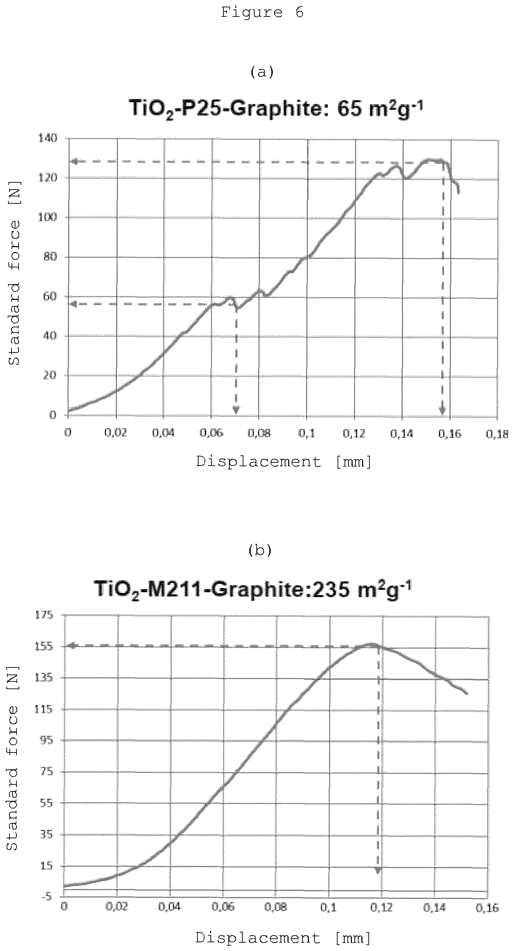

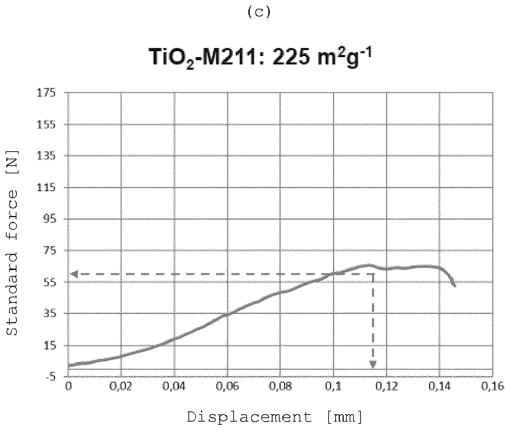

Results of compressive strength (Druckbeständigkeit) tests are shown in Figure 6. Figures 6(a) to (c) are graphs in which a force applied to the test specimen is plotted against a deformation of the test specimen (displacement of the piston). The tests have been performed on cylinder like pellets, and a compressive load has been applied by a piston along a longitudinal direction of the cylinder like pellets. A deformation of the cylinder like pellets in the longitudinal direction thereof (displacement of the piston) was recorded. The deformation of the test specimen in a lateral direction thereof (perpendicular to the longitudinal direction) was not restricted.

Fig. 6(a) is a graph corresponding to a test of a cylinder like pellet of TiO$_2$-P25-Graphite (comparative preparative example) having a BET surface area of 65 m$^2$/g. Fig. 6(b) is a graph corresponding to a test of a cylinder like pellet of TiO$_2$-M211-Graphite (preparative example) having a BET surface area of 235 m$^2$/g. Fig. 6(c) is a graph corresponding to a test of a cylinder like pellet of TiO$_2$-M211 having a BET surface area of 225 m$^2$/g but which does not comprise graphitic carbon. The preparative example illustrated in Figure 6(b) was able to withstand higher maximum compressive forces (156 N at a deformation of 0.115 mm) in comparison to the comparative preparative example (130 N at a deformation of 0.16 mm in Fig. 6(a), as indicated by the right and top dashed line). As can further be taken from Figure 6(c), the omission of graphitic carbon significantly reduces the maximum compressive force that can be applied to the test specimen (roughly 55,8 N at a deformation of 0.11 mm, as indicated by the dashed line). In other words, the addition of graphitic carbon allows the test specimen to withstand much higher compressive forces. Moreover, at the point of maximum compressive force, the preparative example of Figure 6(b) (even without the addition of graphitic carbon, as illustrated in Figure 6(c)) has deformed less than the comparative preparative example.

Fig. 6(a) further indicates a region beginning at a compressive force of around 58 N and a deformation of around 0.07 mm (as indicated by the left and lower dashed line) in which the deformation of the pellet of TiO$_2$-P25-Graphite increases while the compressive force applied to the pellet does not substantially increase (or even remains the same). It is believed that this is due to failures occurring within the pellet on a microscopic or macroscopic level which do not yet lead to complete failure (i.e., breakage) of the entire pellet. On the other hand, the preparative example of Fig. 6(b) (even without the addition of graphitic carbon, as illustrated in Figure 6(c)) show a rather continuous behaviour between force applied to the pellet and deformation thereof (before reaching the point of maximum compressive force). Without wishing to be bound by theory, the inventors believe that it is the composition of the shaped body according to the present invention which allows for an improved interaction between the individual particles, so that the load acting on the shaped body can be distributed more evenly within the shaped body. In other words, the shaped body according to the present invention allows for a more even load distribution over the entire dimensions of the shaped body, resulting in a more robust and predictable behaviour when subjected to mechanical stress.

In view of the above, the shaped bodies formed of the catalyst of the present invention are thus able to withstand higher loads, hence being more robust against mechanical disturbances arising from pressure gradients, turbulent flow, etc. The shaped bodies formed of the catalyst of the present invention thus have an increased lifespan.

**Example E - Use of shaped body comprising Pd/TiO$_2$-based catalyst in reversible hydrogen storage-and-release system**

Catalytic activity of the obtained shaped bodies was investigated in a formate dehydrogenation reaction as described in Example C. In all experiments a similar amount of catalyst was used normalised to the amount of Pd (106 mg of Pd) .

**Table E | Catalytic activity in formate dehydrogenation reaction**

|  | Example E.1 | Example E.2 | Example E.3 | Example E.4 | Example E.5 |
|---|---|---|---|---|---|
| Shaped body | P. Example D.1 | P. Example D.2 | P. Example D.3 | P. Example D.4 | P. Example D.5 |
| Catalytic activity (released hydrogen volume) | 65 mL $g_{Pd}$ $^{-1}$ | 86 mL $g_{Pd}$ $^{-1}$ | 117 mL $g_{pd}$ $^{-1}$ | 102 mL $g_{pd}$ $^{-1}$ | 70 mL $g_{Pd}$ $^{-1}$ |

**Claims**

1.  A Pd/TiO$_2$-based catalyst obtainable by a deposition precipitation method, comprising the steps of:

    - providing a porous support material having a BET surface area of at least 150 m$^2$/g when measured with nitrogen at 77 K, wherein the porous support material is TiO$_2$-based support material;
    - performing a deposition precipitation of Pd on the porous support material to obtain a Pd/TiO$_2$-based catalyst precursor;
    - washing, drying, and activating the Pd/TiO$_2$-based catalyst precursor to obtain the Pd/TiO$_2$-based catalyst.

2.  The Pd/TiO$_2$-based catalyst according to claim 1, wherein the Pd-loading is 0.5-1.5 wt% based on the total mass of the Pd/TiO$_2$-based catalyst, preferably 0.8-1.2 wt%, wherein the Pd-loading is determined by inductively coupled plasma optical emission spectroscopy (ICP-OES).

3.  The Pd/TiO$_2$-based catalyst according to claims 1 or 2, wherein the deposition precipitation is performed in an aqueous solution using at least one Pd-salt.

4.  The Pd/TiO$_2$-based catalyst according to claim 3, wherein the at least one Pd-salt comprises Pd(NO$_3$)$_2$.2H$_2$O, Pd(CH$_3$COO)$_2$ or PdCl$_2$, preferably Pd(NO$_3$)$_2$.2H$_2$O.

5.  The Pd/TiO$_2$-based catalyst according to any of claims 1 to 4, wherein the support material has a BET surface area of at least 200 m$^2$/g when measured with nitrogen at 77 K, preferably at least 225 m$^2$/g.

6.  The Pd/TiO$_2$-based catalyst according to any of claims 1 to 5, wherein the support material is a CeO$_2$-modified TiO$_2$-based support material.

7.  The Pd/TiO$_2$-based catalyst according to claim 6, wherein the CeO$_2$-modified TiO$_2$-based support material comprises at least 25wt% CeO$_2$, and preferably at most 30 wt% CeO$_2$, wherein the wt% is the amount of Ce determined by inductively coupled plasma optical emission spectroscopy (ICP-OES) relative to the total amount of the Pd/TiO$_2$-based catalyst.

8.  The Pd/TiO$_2$-based catalyst according to any of claims 6 or 7, wherein the CeO$_2$-modified TiO$_2$-based support material is prepared by a deposition precipitation of CeO$_2$ on porous TiO$_2$ having a BET surface area of at least 150 m$^2$/g when measured with nitrogen at 77 K, followed by calcination step.

9.  A method of forming a Pd/TiO$_2$-based catalyst by a deposition precipitation method, comprising the steps of:

    - providing a porous support material having a BET surface area of at least 150 m$^2$/g when measured with nitrogen at 77 K, wherein the porous support material is TiO$_2$-based support material;
    - performing a deposition precipitation of Pd on the porous support material to obtain a Pd/TiO$_2$-based catalyst precursor;

- washing, drying, and activating the Pd/TiO$_2$-based catalyst precursor to obtain the Pd/TiO$_2$-based catalyst.

10. Use of the Pd/TiO$_2$-based catalyst according to any of claims 1 to 8 in a reversible hydrogen storage-and-release system based on aqueous hydrogenation of bicarbonate and aqueous dehydrogenation of formate.

11. A shaped body comprising the Pd/TiO$_2$-based catalyst according to any claims 1 to 8 and graphitic carbon as a binder, wherein the shaped body is obtained by pressing with a pressure of at least 1 ton/cm$^2$.

12. The shaped body according to claim 11, wherein the content of graphitic carbon is 2-30 wt%, preferably 5-15 wt%, and even more preferably 7.5-12.5 wt%.

13. Use of the shaped body according to claim 12 in a reversible hydrogen storage-and-release system based on aqueous hydrogenation of bicarbonate and aqueous dehydrogenation of formate.

14. A method of forming a shaped body comprising the Pd/TiO$_2$-based catalyst according to any claims 1 to 8 and graphitic carbon as a binder, wherein the method comprises pressing with a pressure of at least 1 ton/cm$^2$.

Figure 1

Figure 2

Figure 3

Figure 4

Figure 5

Average size = 7 ± 2 nm

TiO2 particle size / nm

Figure 6

(a)

**TiO$_2$-P25-Graphite: 65 m$^2$g$^{-1}$**

(b)

**TiO$_2$-M211-Graphite:235 m$^2$g$^{-1}$**

(c)

TiO$_2$-M211: 225 m$^2$g$^{-1}$

Europäisches Patentamt
European Patent Office
Office européen des brevets

## EUROPEAN SEARCH REPORT

**Application Number**

EP 24 17 8910

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YIQUN JIANG ET AL: "Facile synthesis of AuPd nanoparticles anchored on TiOnanosheets for efficient dehydrogenation of formic acid", NANOTECHNOLOGY, INSTITUTE OF PHYSICS PUBLISHING, BRISTOL, GB, vol. 29, no. 33, 8 June 2018 (2018-06-08), page 335402, XP020329612, ISSN: 0957-4484, DOI: 10.1088/1361-6528/AAC79E [retrieved on 2018-06-08] | 1-5,9 | INV. B01J23/44 B01J23/63 B01J21/06 B01J21/18 B01J35/61 B01J37/00 B01J37/03 B01J37/08 C01B3/00 C07C51/41 |
| Y | * page 2, right-hand column, paragraph 2.2 | 10 | B01J35/30 |
| A | - page 3, left-hand column, paragraph 1 * * page 3, right-hand column, paragraph 3. - page 4, left-hand column, paragraph 1; figure 4 * * page 6, right-hand column, paragraph 2 * * page 3, left-hand column, paragraph 2.3 * | 6-8, 11-14 | B01J35/45 B01J37/18 |
|  | ----- |  |  |
| X | BALAYEVA NARMINA O. ET AL: "Rh/TiO2 -Photocatalyzed Acceptorless Dehydrogenation of N-Heterocycles upon Visible-Light Illumination", ACS CATALYSIS, vol. 10, no. 10, 9 April 2020 (2020-04-09), pages 5542-5553, XP093222686, US ISSN: 2155-5435, DOI: 10.1021/acscatal.0c00556 | 1-5,9 | **TECHNICAL FIELDS SEARCHED (IPC)** B01J C07C C01C C01B |
| A | * page 5544, left-hand column, last paragraph - right-hand column, paragraph 2; figure 1(b); table 1 * * page 5550, right-hand column, paragraph 3 * | 6-8, 11-14 |  |
|  | -/-- |  |  |

The present search report has been drawn up for all claims

| Place of search | Date of completion of the search | Examiner |
|---|---|---|
| Munich | 19 November 2024 | Beckmann, Oliver |

page 1 of 3

**EUROPEAN SEARCH REPORT**

**Application Number**

EP 24 17 8910

Europäisches
Patentamt
European
Patent Office
Office européen
des brevets

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | -& BALAYEVA NARMINA O. ET AL: "Rh/TiO2 -Photocatalyzed Acceptorless Dehydrogenation of N-Heterocycles upon Visible-Light Illumination - Supporting Information", ACS CATALYSIS, vol. 10, no. 10, 9 April 2020 (2020-04-09) , pages 5542-5553, XP093222849, US ISSN: 2155-5435, DOI: 10.1021/acscatal.0c00556 * page S2, paragraph 1 * * page S10, last paragraph * * page S11; table S1 * ----- | | |
| X | MORI KOHSUKE ET AL: "Surface Engineering of a Supported PdAg Catalyst for Hydrogenation of CO2 to Formic Acid: Elucidating the Active Pd Atoms in Alloy Nanoparticles", JOURNAL OF THE AMERICAN CHEMICAL SOCIETY, vol. 140, no. 28, 22 June 2018 (2018-06-22), pages 8902-8909, XP093222569, ISSN: 0002-7863, DOI: 10.1021/jacs.8b04852 Retrieved from the Internet: URL:https://pubs.acs.org/doi/pdf/10.1021/j acs.8b04852> | 1-5,9 | |
| Y A | * page 8903, left-hand column, paragraph 4; table 1 * * abstract; page 8902 * ----- -/-- | 10 6-8, 11-14 | **TECHNICAL FIELDS SEARCHED (IPC)** |

The present search report has been drawn up for all claims

| Place of search | Date of completion of the search | Examiner |
|---|---|---|
| Munich | 19 November 2024 | Beckmann, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................................

& : member of the same patent family, corresponding document

EPO FORM 1503 03.82 (P04C01)

page 2 of 3

Europäisches
Patentamt

European
Patent Office

Office européen
des brevets

# EUROPEAN SEARCH REPORT

**Application Number**

EP 24 17 8910

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | QING-YUAN BI ET AL: "An Aqueous Rechargeable Formate-Based Hydrogen Battery Driven by Heterogeneous Pd Catalysis", ANGEWANDTE CHEMIE, WILEY - V C H VERLAG GMBH & CO. KGAA, DE, vol. 126, no. 49, 7 November 2014 (2014-11-07), pages 13801-13805, XP071361947, ISSN: 0044-8249, DOI: 10.1002/ANGE.201409500 * table 1 * | 1-14 | |
| A | MARTIN GRASEMANN ET AL: "Formic acid as a hydrogen source - recent developments and future trends", ENERGY & ENVIRONMENTAL SCIENCE, 1 January 2012 (2012-01-01), XP055031833, ISSN: 1754-5692, DOI: 10.1039/c2ee21928j * last sentence of the second paragraph in the left column on page 7; page 7, left-hand column, paragraph 2 * | 6-8 | |

TECHNICAL FIELDS
SEARCHED (IPC)

The present search report has been drawn up for all claims

| Place of search | Date of completion of the search | Examiner |
|---|---|---|
| Munich | 19 November 2024 | Beckmann, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    ........................................................................................

& : member of the same patent family, corresponding document

EPO FORM 1503 03.82 (P04C01)

page 3 of 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MORI et al.** JACS. ACS publications, 2018, vol. 140, 8902-8909
- **ZHANG et al.** Journal of Catalysis. Elsevier, 2022, vol. 405, 152-163
- **D. KONINGSBERGER** ; **B. MOJET** ; **G. VAN DORSSEN** ; **D. RAMAKER**. XAFS spectroscopy; fundamental principles and data analysis.. *Topics in catalysis*, 2000, vol. 10, 143-155
- **A. ANKUDINOV** ; **J. REHR**. Theory of solid-state contributions to the X-ray elastic scattering amplitude.. *Physical Review B*, 2000, vol. 62, 2437
- **A. L. ANKUDINOV** ; **B. RAVEL** ; **J. REHR** ; **S. CONRADSON**. Real-space multiple-scattering calculation and interpretation of x-ray-absorption near-edge structure.. *Physical Review B*, 1998, vol. 58, 7565
- **A. JENTYS**. Estimation of mean size and shape of small metal particles by EXAFS. *Physical Chemistry Chemical Physics*, 1999, vol. 1, 4059-4063